(19) Europäisches Patentamt
European Patent Office
Office européen des brevets

(11) Veröffentlichungsnummer: **0 499 844 B1**

(12) **EUROPÄISCHE PATENTSCHRIFT**

(45) Veröffentlichungstag der Patentschrift: **02.11.94**

(51) Int. Cl.$^5$: **C09D 157/06**, C08F 246/00

(21) Anmeldenummer: **92101431.2**

(22) Anmeldetag: **29.01.92**

# (54) Verwendung wässriger Polymerisatzubereitungen als Anstrichfarben.

(30) Priorität: **22.02.91 DE 4105601**

(43) Veröffentlichungstag der Anmeldung:
**26.08.92 Patentblatt 92/35**

(45) Bekanntmachung des Hinweises auf die Patenterteilung:
**02.11.94 Patentblatt 94/44**

(84) Benannte Vertragsstaaten:
**AT BE CH DE DK FR LI NL**

(56) Entgegenhaltungen:
**DE-A- 3 835 041**

(73) Patentinhaber: **BASF Aktiengesellschaft**
**Carl-Bosch-Strasse 38**
**D-67063 Ludwigshafen (DE)**

(72) Erfinder: **Dersch, Rolf, Dr.**
**Kastanienweg 11 c**
**W-6730 Neustadt (DE)**
Erfinder: **Ley, Gregor, Dr.**
**In den Trankstuecken**
**W-6719 Wattenheim (DE)**
Erfinder: **Melan, Michael, Dr.**
**Hans-Willmann-Strasse 4**
**W-6706 Wachenheim (DE)**
Erfinder: **Neutzner, Josef, Dr.**
**Erschigweg 32**
**W-6730 Neustadt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft die Verwendung wäßriger Polymerisatzubereitungen als Anstrichfarben, die im wesentlichen

A) 3 bis 30 Gew.-% Polymerisatteilchen, die aus

a) 0,01 bis 4 Gew.-% wenigstens eines Mercaptosilans der allgemeinen Formel I

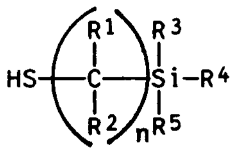

I,

in der die Variablen folgende Bedeutung haben:

| | |
|---|---|
| n | 1 bis 8 |
| $R^1$, $R^2$ | Wasserstoff und/oder $C_1$- bis $C_4$-Alkylgruppen |
| $R^3$, $R^4$, $R^5$ | $C_1$- bis $C_6$-Alkylgruppen und/oder $C_1$- bis $C_6$-Alkoxygruppen, mit der Maßgabe, daß mindestens einer der Reste $R^3$ bis $R^5$ eine Alkoxygruppe ist, |

und

b) radikalisch polymerisierbaren ethylenisch ungesättigten Monomeren als Restmenge in polymerisierter Form aufgebaut sind, wobei die Polymerisate eine Glasübergangstemperatur von -40 bis 40 °C aufweisen,

B) 15 bis 65 Gew.-% anorganische Füllstoffe,

C) 0,1 bis 5 Gew.-% grenzflächenaktive Substanzen,

D) 0 bis 15 Gew.-% anstrichübliche Hilfsmittel und

E) 25 bis 60 Gew.-% Wasser enthalten.

Aus der DE-A 38 35 041 sind wäßrige Polymerisatzubereitungen bekannt, die neben 40 bis 90 Gew.-% an anorganischen Füllstoffen wirksame Mengen an Emulgatoren und 3 bis 30 Gew.-% Polymerisatteilchen einer Glasübergangstemperatur Tg von -60 bis 40 °C enthalten, wobei die Polymerisatteilchen aus radikalisch polymerisierbaren ethylenisch ungesättigten Monomeren sowie zu 0,1 bis 4 Gew.-% aus einem Mercaptosilan der allgemeinen Formel I in polymerisierter Form aufgebaut sind. Diese wäßrigen Polymerisatzubereitungen werden in der DE-A 38 35 041 als Dichtungsmassen sowie Klebstoffe für keramische Fliesen empfohlen, deren Haftung im verfestigten Zustand eine erhöhte Wasserbeständigkeit aufweist.

Aus der DE-A 38 07 285 ist bekannt, daß Anstrichfarben auf der Basis handelsüblicher wäßriger Polymerisatdispersionen im getrockneten Zustand eine nicht voll befriedigende Scheuerfestigkeit aufweisen, weshalb zum Erhalt besonders scheuerfester Anstriche die Mitverwendung von Styrol-Acrylsäure-Copolymerisaten eines zahlenmittleren Molekulargewichts $\overline{M}_n$ von 500 bis 2000 empfohlen wird. Ziel der vorliegenden Erfindung war daher, die Verwendung von wäßrigen Polymerisatzubereitungen als Anstrichfarben, die ohne Mitverwendung niedermolekularer Styrol-Acrylsäure-Copolymerisate bereits eine erhöhte Scheuerfestigkeit aufweisen. Demgemäß wurde die Verwendung der eingangs definierten wäßrigen Polymerisatzubereitungen als Anstrichfarben gefunden.

Das Polymerisat A) enthält in vorteilhafter Weise Mercaptosilane I mit n = 2 bis 4 einpolymerisiert. Bevorzugte Reste $R^1$, $R^2$ sind Wasserstoff und Methyl, während als Reste $R^3$ bis $R^5$ mit Vorteil Methyl, Ethyl, Methoxy und Ethoxy in Betracht kommen, wobei mindestens einer der Reste $R^3$ bis $R^5$ Methoxy oder Ethoxy sein muß. Besonders bevorzugt einpolymerisierte Mercaptosilane I sind 3-Mercaptopropyl-trimethoxysilan, 3-Mercaptopropyl-triethoxysilan sowie 3-Mercaptopropylmethyl-dimethoxysilan, unter denen wiederum das 3-Mercaptopropyl-trimethoxysilan das geeigneteste ist. Die Mercaptosilane I sind bekannt und im Handel erhältlich. Vorzugsweise enthalten die Polymerisate A) 0,01 bis 1 Gew.-% wenigstens eines Mercaptosilans I einpolymerisiert.

Als radikalisch polymerisierbare ungesättigte Hauptmonomere für den Aufbau der Komponente A) kommen beispielsweise Acrylsäure- und Methacrylsäureester eines $C_1$- bis $C_8$-Alkanols, Vinylester von $C_2$- bis $C_{12}$-n-Alkansäuren sowie $C_5$- bis $C_{10}$-Versatic®-Säuren (Warenzeichen der Firma Shell für Monocarbonsäuren mit längeren Seitenketten und tertiären Carboxylgruppen), vinylaromatische Monomere wie Styrol oder Vinyltoluole, Acryl- und Methacrylnitril, Vinylchlorid und Ethylen in Betracht. Aus der Reihe der Acrylate sind n-, iso- und tert.-Butyl-, n-Hexyl- und 2-Ethylhexylacrylat von besonderem Interesse. Als Methacrylsäureester seien vor allem Methyl- und n-Butylmethacrylat genannt, wohingegen aus der Reihe der Vinylester Vinylacetat, Vinylpropionat, Vinyldodecanoat sowie die Vinylester der Versatic 9- und der Versatic 10-Säure bevorzugt sind.

Als Hilfsmonomere werden in der Regel 3 bis 5 C-Atome enthaltende $\alpha,\beta$-ethylenisch ungesättigte Mono- oder Dicarbonsäuren sowie deren Amide, Vinylsulfonsäure, Amidopropansulfonsäure, Hydroxyalkylacrylate sowie -methacrylate wie 2-Hydroxyethylacrylat und -methacrylat, vernetzend wirkende Monomere wie Divinylbenzol, Bisacryl- und -methacrylsäureester niederer Alkandiole sowie Alkylol- oder Epoxidgruppen tragende Monomere einpolymerisiert. Die Gesamtmenge dieser Hilfsmonomeren beträgt in der Regel, bezogen auf das Polymerisat A), weniger als 10 Gew.-%. Vorzugsweise werden keine der vernetzend wirkenden Monomeren einpolymerisiert.

Insgesamt werden mit Hilfe der Beziehung von Fox die Gewichtsanteile der ethylenisch ungesättigten Monomeren an A) in vorteilhafter Weise so gewählt, daß A) eine Glasübergangstemperatur Tg von -10 bis 25 °C aufweist. Nach Fox [T.G. Fox, Bull. Am. Phys. Soc. (Ser. II) 1, 123 (1956)] gilt für die Glasübergangstemperatur von Copolymeren in guter Näherung

$$\frac{1}{Tg} = \frac{X^1}{Tg^1} + \frac{X^2}{Tg^2} + \cdots \frac{X^n}{Tg^n},$$

wobei $X^1$, $X^2$, ..., $X^n$ die Massenbrüche der Monomeren 1, 2, ..., n und $Tg^1$, $Tg^2$, ..., $Tg^n$ die Glasübergangstemperaturen der entsprechenden Homopolymeren in Grad Kelvin bedeuten. Die Glasübergangstemperaturen der Homopolymerisate der oben aufgeführten Monomeren sind bekannt und z.B. in J. Brandrup, E.H. Immergut, Polymer Handbook, 1st Ed., J. Wiley, New York 1966 und 2nd Ed., J. Wiley, New York 1975, aufgeführt. Der Einfluß der Mercaptosilane I auf die Glasübergangstemperatur von A) ist im allgemeinen aufgrund ihres geringen Gewichtsanteils vernachlässigbar. Besonders vorteilhafte Polymerisate A) sind solche, deren Hauptmonomere nur aus Styrol und Acrylsäureestern oder zu 20 bis 80 Gew.-% aus Vinylpropionat und im übrigen aus n- und/oder tert.-Butylacrylat und/oder Vinylchlorid bestehen.

Die Polymerisate A werden zweckmäßig als Polymerisatdispersionen in wäßrigem Medium nach dem an sich bekannten Verfahren der Emulsionspolymerisation in Gegenwart von wasserlöslichen radikalbildenden Initiatoren und grenzflächenaktiven Substanzen C) sowie gegebenenfalls in Gegenwart von Reglern sowie weiteren Hilfsmitteln hergestellt. Geeignete grenzflächenaktive Substanzen C) sind z.B. Emulgatoren sowie Schutzkolloide. Als Emulgatoren C haben sich hierfür besonders ethoxylierte Mono-, Di- und Tri-Alkylphenole (EO-Grad: 3 bis 50, Alkylrest: $C_4$ bis $C_9$), ethoxylierte Fettalkohole (EO-Grad: 3 bis 50, Alkylrest: $C_8$ bis $C_{36}$) sowie Alkali- und Ammoniumsalze von Alkylsulfaten (Alkylrest: $C_8$ bis $C_{12}$), von ethoxylierten Alkanolen (EO-Grad: 4 bis 30, Alkylrest: $C_{12}$ bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_8$ bis $C_{18}$) bewährt. Die genannten Emulgatoren können auch im Gemisch angewendet werden. Insbesondere bei Vinylester einpolymerisiert enthaltenden Copolymerisatdispersionen empfiehlt es sich als weitere grenzflächenaktive Substanzen C) Schutzkolloide wie Polyvinylalkohole, Cellulosederivate oder Vinylpyrrolidon enthaltende Copolymerisate mitzuverwenden.

Als wasserlösliche Polymerisationsinitiatoren kommen vor allem Peroxide wie die Alkalimetallperoxidisulfate, Ammoniumperoxidisulfat, Wasserstoffperoxid oder kombinierte Systeme, die ein organisches Reduktionsmittel, z.B. das Natriumsalz der Hydroxymethansulfinsäure, ein Peroxid, z.B. tert.-Butylhydroperoxid und wahlweise eine geringe Menge einer im Polymerisationsmedium löslichen Metallverbindung, deren metallische Komponente in mehreren Wertigkeitsstufen auftreten kann, enthalten, z.B. Ascorbinsäure/Eisen-(II)sulfat/Natriumperoxidisulfat, in Betracht. Als weitere geeignete Reduktionsmittel seien in diesem Zusammenhang Natriumsulfit, Natriumhydrogensulfit oder Natriummetabisulfit genannt. Die Emulsionspolymerisationstemperatur und die verwendete Menge an Polymerisationsinitiatoren wird in der Regel so bemessen, daß ein zahlenmittleres Molekulargewicht $\overline{M}_n$ des dispergierten Polymerisats A) von $5 \cdot {}^{103}$ bis $5 \cdot 10^7$, bevorzugt $10^5$ bis $2 \cdot 10^7$ erhalten wird.

In der Regel beträgt die Emulsionspolymerisationstemperatur 30 bis 95, vorzugsweise 60 bis 95 °C. Art und Menge der eingesetzten grenzflächenaktiven Substanzen bestimmen im wesentlichen den mittleren Durchmesser der resultierenden dispergierten Polymerisatteilchen. Vorzugsweise werden sie so gewählt, daß kleine Polymerisatteilchen entstehen. Ein Maß für den mittleren Durchmesser der dispergierten Polymerisatteilchen ist die Lichtdurchlässigkeit (LD-Wert) der wäßrigen Polymerisatdispersion. Bevorzugt werden die Polymerisate A) in wäßriger Emulsion so hergestellt, daß die resultierenden Ausgangsdispersionen bei einer Verdünnung auf einen Feststoffgehalt von 0,01 Gew.-% einen LD-Wert, gemessen mit einem handelsüblichen Photometer (bei einer Wellenlänge von 0,546 $\mu$m) bei einer Schichtdicke von 25 mm relativ zu Wasser (dem willkürlich ein LD-Wert von 100 zugeordnet wird), einen LD-Wert von 40 bis 95, besonders bevorzugt von 50 bis 90 aufweisen. Um derartige Ausgangsdispersionen zu erhalten, müssen in

der Regel, bezogen auf die Menge der zu polymerisierenden Monomeren, 0,5 bis 5 Gew.-% an grenzflächenaktiven Substanzen eingesetzt werden. Die Emulsionspolymerisation zur Herstellung des Polymerisates A) kann sowohl diskontinuierlich, halbkontinuierlich in Form eines Zulaufverfahrens oder kontinuierlich durchgeführt werden. Bevorzugt ist das Zulaufverfahren, bei dem man einen Teil des Polymerisationsansatzes vorlegt, auf die Polymerisationstemperatur erhitzt und anschließend den Rest in getrennten Zuläufen, von denen wenigstens einer die Monomeren in reiner oder in emulgierter Form enthält, kontinuierlich zuführt. Das wenigstens eine Mercaptosilan kann dabei teilweise oder vollständig in die Vorlage oder als Bestandteil des Zulaufs zugegeben werden. Vorzugsweise wird es vollständig über den Zulauf kontinuierlich zudosiert. Der Feststoffgehalt der so erhältlichen, A) in dispergierter Form enthaltenden wäßrigen Ausgangsdispersionen beträgt 40 bis 70, vorzugsweise 50 bis 60 Gew.-%. In vorteilhafter Weise werden die fertigen Dispersionen mit Ammoniak auf pH 3 bis 10, vorzugsweise 5 bis 9, eingestellt.

Als Komponente B) werden mit Vorteil carbonatische, sulfatische oder silicatische Füllstoffe wie kristallines Calciumcarbonat, Glimmer; Talcum, Schwerspat, Quarzmehl oder Aluminiumsilicate zugesetzt. Weiterhin umfaßt der Begriff anorganische Füllstoffe Pigmente wie Titandioxid, Chromoxid oder verschiedenfarbige Eisenoxide. Im allgemeinen werden die Füllstoffe in feiner Körnung zugegeben. Die durchschnittliche Korngröße ($\bar{d}$), als arithmetisches Mittel der jeweils größten Durchmesser, beträgt bevorzugt 0,01 bis 100 µm. Um eine homogene Verteilung der Füllstoffe zu gewährleisten, werden in der Regel als weitere grenzflächenaktive Substanzen C), bezogen auf die Füllstoffe normalerweise 0,2 bis 0,6 Gew.-%, die Füllstoffe dispergierende Mittel wie Natriumhexametaphosphat, niedermolekulare Polyacrylsäure ($\overline{M}_n$ = $10^3$ bis $2 \cdot 10^4$) und deren Alkalimetall- sowie Ammoniumsalze, aber auch ethoxylierte Fettalkohole (EO-Grad: 3 bis 100, Alkylrest: $C_8$- bis $C_{36}$) zugegeben. Zusätzlich können die erfindungsgemäßen Zubereitungen insgesamt bis zu 15 Gew.-% anstrichübliche Hilfsmittel D) wie als äußere Weichmacher geeignete niedermolekulare organische Substanzen, z.B. Adipinsäureester oder Phthalsäureester, organische Lösungsmittel wie Trimethylpentandiolmonoisobutyrat, Testbenzine des Siedebereichs 140 bis 210°C sowie Derivate des Ethylen- oder Propylenglycol wie Ethylenglycolmono-n-butylether oder Diethylenglycolmono-n-butylether$_1$ konservierend wirkende Stoffe, schaumdämpfende Mittel, verdickendwirkende Stoffe wie z.B. hochmolekulare Methylhydroxiethylcellulose und Mattierungsmittel enthalten.

In vorteilhafter Weise bildet das für die Emulsionspolymerisation zur Herstellung von A) verwendete Wasser die Komponente E). Wasser kann jedoch auch in reiner Form den erfindungsgemäß zu verwendenden Zubereitungen zugegeben werden. Die Herstellung der erfindungsgemäß zu verwendenden Zubereitungen erfolgt zweckmäßigerweise dadurch, daß man in eine aus Wasser, die Füllstoffe dispergierenden Mitteln sowie gegebenenfalls verdickend wirkenden und schaumdämpfenden Mitteln zusammengesetzte Vorlage die Füllstoffe einrührt, anschließend gegebenenfalls äußere Weichmacher und/oder organische Lösungsmittel und abschließend eine die Komponente A) als disperse Phase enthaltende 40 bis 70 gew.-%ige wäßrige Ausgangsdispersion zugibt.

Die bei erfindungsgemäßer Anwendung erhältlichen Anstriche weisen eine erhöhte Scheuerfestigkeit auf. Dies gilt insbesondere für hochgefüllte erfindungsgemäß zu verwendende wäßrige Zubereitungen, wie sie üblicherweise für Innenanstriche verwendet werden. In diesen Fällen beträgt der Füllstoffanteil in der wäßrigen Zubereitung 50 bis 65 Gew.-%. Die erfindungsgemäße Anwendung kann jedoch auch im Außenbereich, z.B. für Fassaden- oder Korrosionsschutzanstriche erfolgen. Die Anstriche können durch Spritzen, Streichen, Rollen, Tauchen oder Fluten auf Untergrunde verschiedenster Art, wie z.B. Papiertapete, Holz, mineralische und kunstharzgebundene Putze oder Metall aufgebracht werden.

Beispiel B und Vergleichsbeispiele V1 und V2

a) Herstellung der Ausgangsdispersionen B, V1 und V2

V1: Die Ausgangsdispersion V1 entsprach sowohl in ihrer Zusammensetzung als auch in ihrer Herstellung der Dispersion 5 aus den Vergleichsbeispielen der EP-B 208 194.

Monomerenzusammensetzung V1:
2,5 Gew.-% Acrylsäure
0,75 Gew.-% Acrylamid
0,75 Gew.-% Methacrylamid
48 Gew.-% Styrol und
48 Gew.-% n-Butylacrylat

Feststoffgehalt V1:
50 Gew.-%, LD-Wert: 88, Tg: 20°C

B: Die Ausgangsdispersion B entsprach V1 sowohl in Zusammensetzung und Herstellung, abgesehen davon, daß anstelle von 48 Gew.-% Styrol nur 47,9 Gew.-% Styrol und zusätzlich 0,1 Gew.-% 3-Mercaptopropyl-tri-methoxysilan einpolymerisiert wurden, wobei das 3-Mercaptopropyl-tri-methoxysilan als Bestandteil des Zulauf I der Emulsionspolymerisation zugeführt

wurde.
Feststoffgehalt B:
50 Gew.-%, LD-Wert: 88, Tg: 19 °C

V2: Wie B, anstelle von 0,1 Gew.-% 3-Mercaptopropyl-trimethoxysilan wurden jedoch 0,2 Gew.-% tert.-Dodecylmercaptan und dementsprechend nur 47,8 Gew.-% Styrol einpolymerisiert.
Feststoffgehalt V2:
50 Gew.-%, LD-Wert: 77, Tg: 18 °C.

b) Herstellung von Anstrichfarben aus den Dispersionen B, V1 und V2

Durch jeweiliges Einrühren, in der Abfolge der nachfolgend aufgelisteten Bestandteile, in 91 g Wasser wurden die Anstrichfarben AB, AV1 und AV2 hergestellt:

1,8 g Natriumhexametaphosphat (als 10 gew.-%iges wäßriges Gemisch)
0,8 g Ammoniumsalz einer Polyacrylsäure, $\overline{M}_n = 5 \cdot 10^3$ (als 30 gew.-%iges wäßriges Gemisch)
0,6 g Ammoniak (als 25 gew.-%iges wäßriges Gemisch)
3 g Konservierungsmittel
3 g hochmolekulare Methylhydroxyethylcellulose (als 2 gew.-%iges wäßriges Gemisch)
12 g Testbenzin eines Siedebereichs von 180 bis 210 °C
12 g Trimethylpentandiolmonoisobutyrat
71 g Titandioxid, Rutil ($\overline{d}$ = 0,3 µm)
12 g Aluminiumsilicat ($\overline{d}$ = 0,03 µm)
83 g Calciumcarbonat ($\overline{d}$ = 2 µm)
417 g Calciumcarbonat ($\overline{d}$ = 5 µm)
1,2 g ethoxylierten Fettalkohol, EO-Grad: 80, Alkylrest: $C_{16}$- bis $C_{18}$ (als 20 gew.-%iges wäßriges Gemisch)
0,75 Entschäumer
28,3 g Wasser und
90,7 g Ausgangsdispersion B1 oder V1 oder V2

c) Prüfung der Scheuerfestigkeit von Anstrichen mit den Anstrichfarben AB, AV1 und AV2

Die Prüfung der Scheuerfestigkeit von Anstrichen mit den Anstrichfarben AB, AV1 und AV2 erfolgte in Anlehnung an die DIN 53 778, Blatt 2. Mit Hilfe eines 60 mm breiten Rakels wurde auf eine Leneta®-Folie von ca. 430 x 80 mm ein Anstrichfilm aufgezogen, dessen Trockenschichtdicke 100 µm betrug. Dieser Film wurde 28 Tage bei Raumtemperatur gelagert. Dann wurde in einem Scheuerprüfgerät unter ständigem Zutropfen der Waschflüssigkeit eine Scheuerbürste über den Anstrichfilm geführt.

Die Anzahl der Scheuerzyklen bis zum Durchscheuern des Anstriches diente als Maß für die Scheuerfestigkeit. Die Ergebnisse zeigt die Tabelle.

Tabelle

| Anstrichfarbe | Anzahl der Scheuerzyklen |
|---|---|
| AB | 1710 |
| AV1 | 940 |
| AV2 | 423 |

## Patentansprüche

1. Verwendung wäßriger Polymerisatzubereitungen als Anstrichfarben, die im wesentlichen
   A) 3 bis 30 Gew.-% Polymerisatteilchen, die aus
      a) 0,01 bis 4 Gew.-% wenigstens eines Mercaptosilans der allgemeinen Formel I

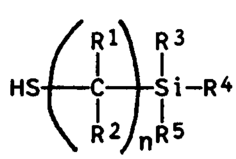

I,

in der die Variablen folgende Bedeutung haben:

n 1 bis 8

$R^1$, $R^2$ Wasserstoff und/oder $C_1$- bis $C_4$-Alkylgruppen
$R^3$, $R^4$, $R^5$ $C_1$- bis $C_6$-Alkylgruppen und/oder $C_1$- bis $C_6$-Alkoxygruppen, mit der Maßgabe, daß mindestens einer der Reste $R^3$ bis $R^5$ eine Alkoxygruppe ist,

und

b) radikalisch polymerisierbaren ethylenisch ungesättigten Monomeren als Restmenge in polymerisierter Form aufgebaut sind,

wobei die Polymerisate eine Glasübergangstemperatur von -40 bis 40 °C aufweisen,

B) 15 bis 65 Gew.-% anorganische Füllstoffe,

C) 0,1 bis 5 Gew.-% grenzflächenaktive Substanzen,

D) 0 bis 15 Gew.-% anstrichübliche Hilfsmittel und

E) 25 bis 60 Gew.-% Wasser enthalten.

## Claims

1. Use of an aqueous polymer formulation as an architectural coating material which essentially contains

A) from 3 to 30% by weight of polymer particles which consist of

a) from 0.01 to 4% by weight of one or more mercaptosilanes of the general formula I

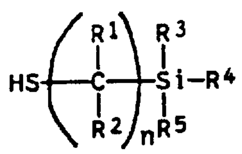

I,

where n is from 1 to 8, $R^1$ and $R^2$ are each hydrogen and/or $C_1$-$C_4$-alkyl and $R^3$, $R^4$ and $R^5$ are each $C_1$-$C_6$-alkyl and/or $C_1$-$C_6$-alkoxy, with the proviso that one or more of the radicals $R^3$ to $R^5$ is alkoxy,

and

b) ethylenically unsaturated monomers capable of undergoing free radical polymerization, as a residual amount in polymerized form,

the polymer having a glass transition temperature of from -40 to 40 °C,

B) from 15 to 65% by weight of inorganic fillers,

C) from 0.1 to 5% by weight of surfactants,

D) from 0 to 15% by weight of assistants conventionally used in architectural coatings and

E) from 25 to 60% by weight of water.

## Revendications

1. Utilisation de préparations aqueuses de polymères à titre de peintures qui contiennent, en essence, de

A) 3 à 30% en poids de particules de polymère, qui se composent

a) de 0,01 à 4% en poids d'au moins un mercaptosilane de la formule générale I

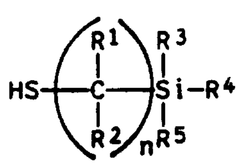

I,

dans laquelle

n une valeur qui varie de 1 à 8,
$R^1$, R2 représentent chacun un atome d'hydrogène et/ou un radical alkyle en $C_1$ à $C_4$,
$R^3$, $R^4$, $R^5$ représentent chacun un radical alkyle en $C_1$ à $C_6$ et/ou un radical alcoxy en $C_1$ à $C_6$, avec la condition qu'au moins l'un des symboles $R^3$ à $R^5$ représente un radical alcoxy,

et

b) de monomères éthyléniquement insaturés et polymérisables par voie radicalaire, à titre de quantité résiduelle, sous forme polymérisée,

où les polymères possèdent une température de transition vitreuse de -40 à 40 °C,

B) 15 à 65% en poids de charges inorganiques,

C) 0,1 à 5% en poids de substances tensioactives,

D) 0 à 15% en poids d'adjuvants usuels pour peintures et

E) 25 à 60% en poids d'eau.